# EUROPEAN PATENT APPLICATION

(11) **EP 3 716 094 A1**
(43) Date of publication of application: **30.09.2020**
(21) Application number: 19772639.1
(22) Date of filing: 06.03.2019
(51) Int. Cl.: G06F 16/27, G06F 16/25

(54) **DATA SYNCHRONIZATION METHOD AND APPARATUS**

(30) Priority: 25.01.2019 CN 201910071849
(71) Applicant: Wangsu Science & Technology Co., Ltd., Shanghai 200030 (CN)
(72) Inventor: WANG, Jianfu, Shanghai 200030 (CN)
(74) Representative: Vinsome, Rex Martin
(86) International application number: PCT/CN2019/077238
(87) International publication number: WO 2020/151054

(57) **Abstract**

Some embodiments of the present application provide a method for synchronizing data and device, the method including: after receiving each source data transmitted from each source database within a current cycle, the management device calculates according to correlative relationships among the source databases and according to a plurality of data records included in each source data to obtain a target data set, and transmits the target data set to each data sink. In embodiments of the present application, the management device just needs to implement the calculation process, and performs the calculation of the target data set during the synchronization process, so that data sinks may directly acquire the target data set, which significantly reduces the computational amount of the entire system and improves timeliness of data synchronization.

## Description

### TECHNICAL FIELD

The present disclosure relates to data processing technologies, and particularly relates to a method for synchronizing data and a device for synchronizing data.

### BACKGROUND

Data synchronization has been an unavoidable issue in interaction between computer systems. Timeliness and accuracy of data synchronization directly affects the interaction between computer systems. In the existing data synchronization technologies, generally speaking, each source data in each source database is first synchronized to a data sink separately, and then calculated by the data sink to obtain required data.

The inventor finds that at least the following problem exists in the existing technologies: in this method, every data sink needs to perform such a calculation process as described above which is complex and time-consuming. Accordingly, a data synchronization method is urgently required to solve the complex and time-consuming problem in data synchronization in the existing technologies.

### SUMMARY

Some embodiments of the present disclosure are directed to provide a method for synchronizing data and a device for synchronizing data to solve the complex and time-consuming problem in data synchronization in the existing technologies.

An embodiment of the present disclosure provides a method for synchronizing data applied to a data synchronization system including a management device, a plurality of source databases, and at least one data sink. The method includes following steps:
the management device receives each source data transmitted from each source database within a current cycle, the source data is total data of the corresponding source database within the current cycle;
the management device calculates according to correlative relationships among the source databases and according to a plurality of data records included in each source data to obtain a target data set;
the management device transmits the target data set to the data sink which is used for receiving data.

In this way, the management device is configured in this embodiment of the present disclosure, for calculating each source data of each source database, thereby determining a target data set at a level of the management device, and further, a target incremental data set could be transmitted to the data sink. In this embodiment of the present disclosure, compared with a manner in the existing technologies that every data sink needs to calculate the target data set separately, the calculation process is only implemented by the management device, and the calculation of the target data set is performed during the synchronization process, so that data sinks may directly acquire the target data set, which significantly reduces computational amount of the entire system and improves timeliness of data synchronization. Further, by using the management device to transmit the target data set to a plurality of data sinks, one target data set may be synchronously transmitted to the plurality of data sinks, thereby enabling to improve efficiency for synchronizing data.

In a possible embodiment, the step that the management device calculates according to the correlative relationships among the source databases and the plurality of data records included in each source data to obtain the target data set, includes the following:
the management device determines a first data set within the current cycle according to the correlative relationships among the source databases and according to the plurality of data records included in each source data;
the management device determines an incremental data set of the first data set as compared with a second data set, and the incremental data set is as the target data set, if the management device determines that the second data set corresponding to a previous cycle of the current cycle exists, the second data set being obtained according to each source data transmitted from each of the source databases in the previous cycle.

In a possible embodiment, each data record comprises an index value.

The correlative relationships among the source databases are determined in the following way:
the management device determines, with respect to a first data record in a first source data, a correlative relationship between the first data record and a second data record according to a position of the first data record in a first data source and a position of the second data record in a second data source, if the management device determines that the second data record having an index value consistent with an index value of the first data record exists in the second source data according to the index value of the first data record, the first source data being any source data of the source data, and the first data record being as any data record of the plurality of data records included in the first source data;
the correlative relationships among the source databases are determined according to correlative relationships among the plurality of data records included in each source data.

In a possible embodiment, the source databases are heterogeneous databases which are databases with varied structures; and
the correlative relationships among the source data are based on a structured query language SQL.

In this way, using the universal SQL may reduce difficulty in calculating the heterogeneous source data, logic computation could be easier and data maintenance of the source data could be in convenient.

In a possible embodiment, the management device transmits the target data set to each data sink, including the following:
the management device determines, each target data in the target data set that meets data requirements of each of the data sinks according to data requirements of the data sinks;
the management device transmits each of the target data to each corresponding data sink.

A possible embodiment further includes:
the management device takes the first data set as the target data set, if the management device determines that the second data set does not exist.

A possible embodiment, after the management device transmits the target data set to each corresponding data sink, further includes the following:
the management device acquires data synchronization information of each of the data sinks, the data synchronization information including at least one of a data addition record, a data deletion record and a data modification record;
the management device monitors synchronization status of the data sinks according to the data synchronization information of each of the data sinks.

In this way, the synchronization status of the data sinks may be monitored in real time, facilitating statistical analysis by the management device.

A possible embodiment, after the management device receives source data transmitted from the source databases within the current cycle, further includes:
the management device acquires data transmission status of each source database, wherein the data transmission status is determined according to data transmission time and/or data transmission quantity of each source data;
the management device monitors the synchronization status of the source databases according to the data transmission status of each source database.

In this way, the synchronization status of the source databases may be monitored in real time, facilitating statistical analysis by the management device.

A possible embodiment, after the management device transmits the target data set to each data sink, further includes:
the management device transmits an alarm message to an administrator, if the management device determines that the target data set fails to be transmitted and times of failure is greater than a preset threshold, the alarm message being used for notifying the administrator of the failure to transmit the target data set.

In this way, once a status in which the target data set fails to be transmitted several times occurs, the management device may transmit the alarm message to the administrator so that the failures may be processed in time.

An embodiment of the present application provides a device for synchronizing data, wherein the device is applied to a data synchronization system including a management device, a plurality of source databases, and at least one data sink, the device for synchronizing data is a management device including the following:
a receiving unit for receiving each source data transmitted from each source database within a current cycle, the source data being total data of the corresponding source database within the current cycle;
a processing unit for calculating according to correlative relationships among the source databases and according to a plurality of data records included in each source data to obtain a target data set; and
a transmitting unit for transmitting the target data set to each data sink which is used for receiving data.

In a possible embodiment, the processing unit is used for:
determining a first data set within the current cycle according to the correlative relationships among the source databases and according to the plurality of data records included in each source data; and determining an incremental data set of the first data set as compared with a second data set, the incremental data set being made the target data set, if the management device determines that the second data set corresponding to a previous cycle of the current cycle exists, the second data set being obtained according to each source data transmitted from each of the source databases in the previous cycle.

In a possible embodiment, each data record comprises an index value;
and the correlative relationships among the source databases are determined by:
determining, with respect to a first data record in a first source data, a correlative relationship between the first data record and a second data record according to a position of the first data record in a first data source and a position of the second data record in a second data source, if the management device determines that the second data record having an index value consistent with an index value of the first data record exists in the second source data according to the index value of the first data record, the first source data being any source data of the source data, and the first data record being as any data record of the plurality of data records included in the first source data;
determining the correlative relationships among the source databases according to correlative relationships among the plurality of data records included in each source data.

In a possible embodiment, the source databases are heterogeneous databases which are databases with varied structures;
the correlative relationships among the source data are based on a structured query language SQL.

In a possible embodiment, the transmitting unit is specifically used for:
Determining, from the target data set, each target data that meets data requirements of each of the data sinks according to data requirements of the data sinks; and transmitting each of the target data to each corresponding data sink.

In a possible embodiment, the processing unit is further used for:
taking the first data set as the target data set, if it is determined that the second data set does not exist.

In a possible embodiment, after the transmitting unit transmits the incremental data set to each data sink, the processing unit is further used for:
acquiring data synchronization information of each of the data sinks, the data synchronization information including at least one of a data addition record, a data deletion record and a data modification record, and monitoring synchronization status of the data sinks according to the data synchronization information of each of the data sinks.

In a possible embodiment, after the receiving unit receives source data transmitted from the source databases within the current cycle, the processing unit is further used for:
acquiring data transmission status of each source database, wherein the data transmission status is determined according to data transmission time and/or data transmission quantity of each source data; monitoring the synchronization status of the source databases according to the data transmission status of each source database.

In a possible embodiment, after the transmitting unit transmits the target data set to each of the data sinks, the processing unit is further used for:
transmitting an alarm message to the administrator, if it is determined that the target data set fails to be transmitted and times of failure is greater than a preset threshold, the alarm message being used for notifying the administrator of the failure to transmit the target data set.

An embodiment of the present application further provides a device which may implement the above described method for synchronizing data. This function may be implemented by hardware that executes corresponding software. In a possible deign, the device includes a memory which is used for storing a computer-executed instruction, a transceiver which is used for implementing communications between the device and other communication entities, and a processor which is connected with the memory by a bus. When the device runs, the processor executes the computer-executed instruction stored in the memory, so that the device executes the above described method for synchronizing data.

An embodiment of the present disclosure further provides a computer storage medium which stores a software program which, when read and executed by one or more processors, implements the method for synchronizing data described in the above described possible implementations.

An embodiment of the present disclosure further provides a computer program product containing an instruction, which, when running in a computer, enables the computer to implement the method for synchronizing data described in the above described possible implementations.

### BRIEF DESCRIPTION OF THE DRAWINGS

One or more embodiments are described exemplarily with reference to the corresponding figures in the accompanying drawings, and the exemplary descriptions do not constitute a limitation to the embodiments.
Figure 1 is a systematical architecture diagram in accordance with an embodiment of the present disclosure;
Figure 2 is a schematic flowchart of a method for synchronizing data in the embodiment of the present disclosure;
Figure 3 is an overall flowchart of the embodiment of the present disclosure;
Figure 4 is a structure diagram of a device for synchronizing data in the embodiment of the present disclosure.

### DETAILED DESCRIPTION

In order to make the objects, technical solutions and advantages of this disclosure clearer, some embodiments of the present disclosure will be explained below in detail with reference to the accompanying drawings and embodiments. It shall be understood that the specific embodiments described here only explain the disclosure but do not limit the disclosure.

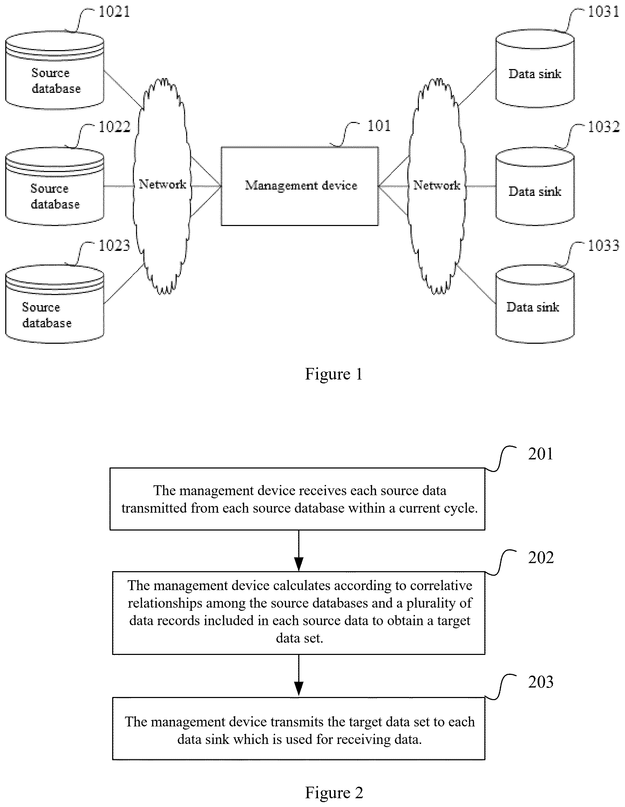

Figure 1 exemplarily shows a systematical architecture diagram in accordance with an embodiment of the present disclosure. As shown in Figure 1, a system 100 includes a management device 101, a plurality of source databases (for example, a source database 1021, a source database 1022 and a source database 1023 as shown in Figure 1), and at least one data sink (for example, a data sink 1031, a data sink 1032, and a data sink 1033 shown in Figure 1). The management device 101 may be connected with any source database over a network, for example, the management device 101 may be connected with any source database of the source database 1021, the source database 1022 and the source database 1023. The management device 101 may be connected with any data sink over a network, for example, the management device 101 may be connected with any one of the data sink 1031, the data sink 1032, and the data sink 1033 over a network.

On the basis of the systematical architecture shown in Figure 1, Figure 2 exemplarily shows a schematic flowchart of a method for synchronizing data provided in the embodiment of the present disclosure, which specifically includes the following steps:
Step 201: the management device receives each source data transmitted from each source database within a current cycle.
Step 202: the management device calculates according to correlative relationships among the source databases and according to a plurality of data records included in each source data to obtain a target data set.
Step 203: the management device transmits the target data set to each data sink which is used for receiving data.

In this way, this embodiment of the present disclosure is configured with the management device, which calculates based on each source data of each source database, thereby determining a target data set at a level of the management device, and further, the target data set may be transmitted to each data sink. In this embodiment of the present disclosure, compared with a manner in the existing technologies that every data sink needs to calculate the target data set separately, the calculation process is only implemented by the management device, and the calculation of the target data set is performed during the synchronization process, so that data sinks may directly acquire the target data set, which significantly reduces the computational amount of the entire system and improves timeliness of data synchronization. Further, by using the management device to transmit the target data set to data sinks, one target data set may be synchronously transmitted to the plurality of data sinks, thereby improving efficiency of data synchronization.

Specifically, in step 201, each source data may be total data of a corresponding source database within the current cycle. For example, Table 1 shows an example of each source data, wherein source data of a source database A correspond to total data A of the source database A within the current cycle, source data of a source database B correspond to total data B of the source database B within the current cycle, source data of a source database C correspond to total data C of the source database C within the current cycle.

**Table 1: An example of each source data**

| Source database | Source data |
|---|---|
| Source database A | Total data A |
| Source database B | Total data B |
| Source database C | Total data C |

Further, each source data may include a plurality of data records. Table 2 shows an example of the source data. The total data A corresponding to the source database A within the current cycle includes a data record A1, a data record A2 and a data record A3. The total data B corresponding to the source database B within the current cycle includes a data record B1, a data record B2 and a data record B3. The total data C corresponding to the source database C within the current cycle includes a data record C1, a data record C2 and a data record C3.

**Table 2: An example of the source data**

| Source data | Data records |
|---|---|
| Total data A | Data record A1 |
| | Data record A2 |
| | Data record A3 |
| Total data B | Data record B 1 |
| | Data record B2 |
| | Data record B3 |
| Total data C | Data record C1 |
| | Data record C2 |
| | Data record C3 |

For example, Table 3a shows an example of each source data transmitted from the source database A within the current cycle. Table 3b shows an example of each source data transmitted from the source database B within the current cycle. It is seen from Tables 3a and 3b that the source data transmitted from the source database A within the current cycle (i.e., the total data corresponding to the source database A within the current cycle) includes: the data record A1, San Zhang scores 80 on Chinese; the data record A2, Si Li scores 90 on Math; the data record A3, Wu Zhao scores 100 on Foreign Language. The source data transmitted from the source database B within the current cycle (i.e., the total data corresponding to the source database B within the current cycle) includes: the data record B1, San Zhang's Chinese supervising teacher is Mr./Ms. Wang; the data record B2, Si Li's Math supervising teacher is Mr./Ms. Qian; and the data record B3, Wu Zhao's Foreign Language supervising teacher is Mr./Ms. Sun.

**Table 3a: An example of source data transmitted from the source database A**

| No. | Source data | | |
|---|---|---|---|
| | Name | Subject | Score |
| A1 | San Zhang | Chinese | 80 |
| A2 | Si Li | Math | 90 |
| A3 | Wu Zhao | Foreign Language | 100 |

**Table 3b: An example of source data transmitted from the source database B**

| No. | Source data | | |
|---|---|---|---|
| | Name | Subject | Supervising teacher |
| B1 | San Zhang | Chinese | Mr./Ms. Wang |
| B2 | Si Li | Math | Mr./Ms. Qian |
| B3 | Wu Zhao | Foreign Language | Mr./Ms. Sun |

Further, each data record may include an index value. Take Table 3a as an example, what "name" corresponds to may be an index value of each data record, i.e., the index value of the data record A1 is "San Zhang", the index value of the data record A2 is "Si Li", and the index value of the data record A3 is "Wu Zhao". Similarly, in Table 3b, the index value of the data record B1 is "San Zhang", the index value of the data record B2 is "Si Li", and the index value of the data record B3 is "Wu Zhao".

Further, after the step 201 is executed, the management device may further acquire data transmission status of each source database, and monitor a data synchronization status of the source databases according to the acquired data transmission status of each source database. The data transmission status may be determined according to data transmission time and/or data transmission quantity of each of the source data. In this way, the synchronization status of the source databases may be monitored in real time, facilitating statistical analysis by the management device.

In step 202, the correlative relationships among the source databases may be determined according to each source data transmitted from each source database within in the current cycle. Specifically, with respect to a first data record in a first source data, the management device may determine a correlative relationship between the first data record and a second data record according to a position of the first data record in a first source data and a position of the second data record in a second source data, if the management device determines that the second data record having an index value consistent with an index value of the first data record exists in the second source data according to the index value of the first data record. The first source data is any source data of the source data, and the first data record is any data record of the plurality of data records included in the first source data. Further, the management device may determine the correlative relationships among the source databases according to correlative relationships among the plurality of data records included in each source data.

Take Tables 3a and 3b for example, with respect to the data record A1 in the source data transmitted from the source database A, the index value of the data record A1 is "San Zhang". Since the data record B1 exists in the source data transmitted from the source database B and the index value of the data record B1 is also "San Zhang", it may be determined that there is a correlative relationship between the data record A1 and the data record B1, and the correlative relationship may be determined according to the position (i.e., a first line) of the data record A1 in the source data transmitted from the source database A and the position (i.e., a first line) of the data record B1 in the source data transmitted from the source database B. That is, there is a correlative relationship between the data record A1 in the first line of the source data transmitted from the source database A and the data record B1 in the first line of the source data transmitted from the source database B. Similarly, it may be determined that there is a correlative relationship between the data record A2 in a second line of the source data transmitted from the source database A and the data record B2 in a second line of the source data transmitted from the source database B; and there is a correlative relationship between the data record A3 in a third line of the source data transmitted from the source database A and the data record B3 in a third line of the source data transmitted from the source database B.

Further, the correlative relationship between the source database A and the source database B may be determined according to the correlative relationship between the data record A1 and the data record A2, the correlative relationship between the data record A3 and the data record B1, and the correlative relationship between the data record B2 and the data record B3. That is, the first line of the source database A is correlated with the first line of the source database B, the second line of the source database A is correlated with the second line of the source database B, and the third line of the source database A is correlated with the third line of the source database B.

In the embodiment of the present disclosure, the management device may calculate according to correlative relationships among the source databases and a plurality of data records included in each source data to obtain a target data set.

Specifically, the management device may determine a first data set within the current cycle according to the correlative relationships among the source databases and according to the plurality of data records included in each source data. The first data set may be a data set of each source data transmitted from each source database. Take contents in Tables 3a and 3b for example, an example of the first data set as shown in Table 4 may be obtained according to the correlative relationships between the source database A and the source database B, and data records included in Tables 3a and 3b described above.

**Table 4: An example of the first data set**

| No. | First data set | | | |
|---|---|---|---|---|
| | Name | Subject | Score | Supervising teacher |
| 1 | San Zhang | Chinese | 80 | Mr./Ms. Wang |
| 2 | Si Li | Math | 90 | Mr./Ms. Qian |
| 3 | Wu Zhao | Foreign Language | 100 | Mr./Ms. Sun |

It shall be noted that in the above described examples, the source databases may be homogeneous databases. In another possible example, the source databases may be heterogeneous databases which are databases with varied structures. Further, the correlative relationships among the source datas are based on a structured query language SQL. Specifically, the heterogeneous source databases may be analyzed, mapped into a corresponding data table, and relationships among the heterogeneous source datas may be analyzed, so as to output an SQL sentence that meets requirements. In this way, using the universal SQL may reduce difficulty in calculating the heterogeneous data and facilitate logic computation and data maintenance.

Further, the management device may first determine whether a second data set corresponding to a previous cycle of the current cycle exists, and if yes, an incremental data set of the first data set as compared with the second data set may be determined, the incremental data set is made the target data set; if not, the first data set may be made the target data set. The second data set may be obtained according to each source data transmitted from each of the source databases in the previous cycle. The obtaining method of the second data set is similar to that of the first data set, and thus will not be described here with more details.

In this embodiment of the present disclosure, the management device just needs to perform calculation of the incremental data set during the synchronization process, so that data sinks may directly acquire the incremental data set, which significantly reduces the computational amount of the entire system and improves timeliness of data synchronization. Further, by using the management device to transmit the incremental data set to a plurality of data sinks, one incremental data set may be transmitted to the plurality of data sinks synchronously, thereby improving efficiency of data synchronization.

Take Table 5 which shows the second data set for example, the first data record in the second data set is that San Zhang scores 80 on Chinese, supervising teacher being Mr./Ms. Wang, and Si Li scores 90 on Math, supervising teacher being Mr./Ms. Qian.

**Table 5: An example of the second data set**

| No. | First data set | | | |
|---|---|---|---|---|
| | Name | Subject | Score | Supervising teacher |
| 1 | San Zhang | Chinese | 80 | Mr./Ms. Wang |
| 2 | Si Li | Math | 90 | Mr./Ms. Qian |

Further, an example of the incremental data set shown in Table 6 may be obtained according to what is shown in Tables 4 and 5, that is, Wu Zhao scores 100 on Foreign Language, supervising teacher being Mr./Ms. Sun.

**Table 6: An example of the incremental data set**

| No. | Incremental data set | | | |
|---|---|---|---|---|
| | Name | Subject | Score | Supervising teacher |
| 3 | Wu Zhao | Foreign Language | 100 | Mr./Ms. Sun |

In step 203, the management device may directly transmit the target data set to each data sink, and the data sinks may be used for receiving data.

Further, the management device may determine each target data that meets data requirements of the data sinks from the target data set according to the data requirements of the data sinks, and further may transmit each of the target data to the corresponding data sink. Take the incremental data set shown in Table 6 as an example, if the data requirement of a data sink A is a need for subject and a score, it may be determined that the target data corresponding to the data sink A is: Wu Zhao scores 100 on Foreign Language. If the data requirement of a data sink B is a need for subject and a supervising teacher, it may be determined that the target data corresponding to the data sink B is: Wu Zhao's Foreign Language supervising teacher is Mr./Ms. Sun.

After the step 203 is executed, the management device may acquire data synchronization information of each data sink, and further, may monitor synchronization status of the data sinks according to the data synchronization information of the data sinks. The data synchronization information may include at least one of a data addition record, a data deletion record and a data modification record. In this way, a process of a target data set being written into each data sink may be monitored in real time and synchronization status of the data sinks may be monitored (for example, a data addition record, a data deletion record and a data modification record may be monitored), thereby facilitating statistical analysis by the management device. Further, in this embodiment of the present disclosure, the management device monitoring a data synchronization process makes the entire data synchronization process transparent to an administrator, thereby facilitating the administrator controlling statistics and publication status of data in real time.

Further, after the step 203 is executed, the management device transmits an alarm message to the administrator, if the management device determines that the target data set fails to be transmitted and times of failure is greater than a preset threshold. The alarm message is used for notifying the administrator of the failure to transmit the target data set. In this way, once a status in which the target data set fails to be transmitted several times occurs, the management device may transmit the alarm message to the administrator so that the failures may be processed in time.

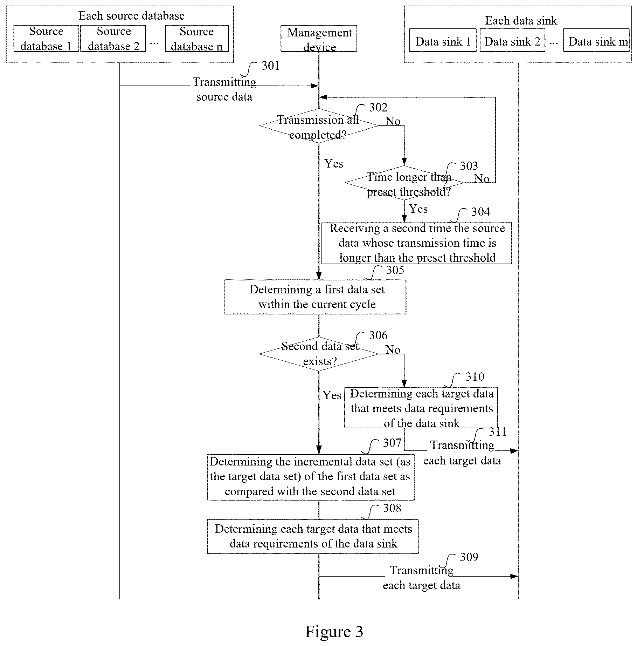

In order to introduce the above described method for synchronizing data more clearly, the overall process of this embodiment of the present disclosure will be described here below with reference to Figure 3, including the following steps:
Step 301: each source database transmits each source data to the management device within the current cycle.
Step 302: the management device determines whether all of the source data have been transmitted completely, a step 303 is executed if yes, or a step 305 is executed otherwise.
Step 303: the management device determines whether data transmission time of each source data is greater than the preset threshold, a step 304 is executed if yes, or return to the step 302 otherwise.
Step 304: the management device tries to receive the source data a second time whose data transmission time is longer than the present threshold.
Step 305: the management device determines the first data set within the current cycle according to correlative relationships among the source databases and according to a plurality of data records included in each source data.
Step 306: the management device determines whether the second data set corresponding to the previous cycle of the current cycle exists, a step 307 is executed if yes, or a step 310 is executed otherwise.
Step 307: the management device determines the incremental data set of the first data set as compared with the second data set, the incremental data set being made the target data set.
Step 308: the management device determines each target data that meets data requirements of the data sinks from the target data set according to the data requirements of the data sinks.
Step 309: the management device transmits each target data to each corresponding data sink.
Step 310: the management device uses the first data set as the target data set, and determines each target data in the target data set that meets the data requirements of the data sinks according to the data requirements of the data sinks.
Step 311: the management device transmits each target data to each corresponding data sink.

With respect to the description in steps 301 to 311, the heterogeneous database is taken as an example for description. First of all, the management device may analyze the heterogeneous source databases, and maps the heterogeneous source databases into a corresponding data table, and analyzes relationships among the heterogeneous source data, so as to a output of SQL sentence that meets requirements. Secondly, the management device may select a stable main memory database scheme (e.g., h2), and create a main memory database according to the source data table corresponding to the heterogeneous source data. Thirdly, the management device may execute a timed task, and synchronize each heterogeneous source data into the memory database. Further, the management device may check whether every heterogeneous source data is synchronized into a corresponding table in the memory database, and begins to calculate if yes. Specifically, the management device executes a query in the memory database to generate total data of the current cycle according to the output of SQL sentence in a previous text, and then determines whether total data corresponding to the previous cycle exists. If the total data does not exist, the total data of the current cycle may be pushed directly into each corresponding data sink. If the total data exists, the total data of the current cycle may be compared with the total data of the previous cycle to generate an incremental data set which is then pushed into each corresponding data sink. Still further, the management device may check whether updated data in each data sink are consistent with data generated in the main memory database in terms of quantity and content, and if yes, it means that the synchronization is successful.

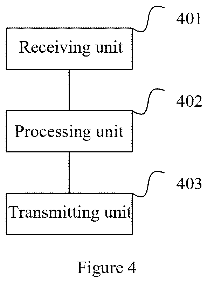

Based on the same inventive concept, Figure 4 exemplarily illustrates a schematic structure diagram of a device for synchronizing data in the embodiment of the present disclosure. The device may be applied to a data synchronization system including a management device, a plurality of source databases, and at least one data sink; the device for synchronizing data may be a management device. As shown in Figure 4, the device includes a receiving unit 401, a processing unit 402, and a transmitting unit 403.

The receiving unit 401 is used for receiving each source data transmitted from each source database within a current cycle, the source data is total data corresponding to the source databases within the current cycle.

The processing unit 402 is used for performing calculation according to correlative relationships among the source databases and according to a plurality of data records included in each source data to determine a first data set within the current cycle. If it is determined that a second data set corresponding to a previous cycle of the current cycle exists, the second data set is compared with the first data set to obtain the incremental data set. The second data set is obtained according to each source data transmitted from each of the source databases in the previous cycle.

The transmitting unit 403 is used for transmitting the incremental data set to the data sink.

In a possible embodiment, each data record includes an index value.

The correlative relationships among the source databases are determined by:
determining, with respect to a first data record in a first source data, a correlative relationship between the first data record and a second data record according to a position of the first data record in a first source data and a position of the second data record in a second source data, if the management device determines that the second data record having an index value consistent with an index value corresponding to the first data record exists in the second source data according to the index value corresponding to the first data record; the first source data being any source data of the source data, and the first data record being as any data record of the plurality of data records included in the first source data;
determining the correlative relationships among the source databases according to correlative relationships among the plurality of data records included in each source data.

In a possible embodiment, the source databases are heterogeneous databases.

The correlative relationships among the source data are based on a structured query language SQL.

In a possible embodiment, the transmitting unit 403 is specifically used for:

Determining, from the incremental data set, each target incremental data that meets data requirements of each of the data sinks according to the data requirements of the data sinks; and transmitting each target incremental data to each corresponding data sink.

In a possible embodiment, the processing unit 402 is further used for:
sending the first data set to each corresponding data sink, if it is determined that the second data set does not exist.

In a possible embodiment, after the transmitting unit 403 transmits the incremental data set to the data sinks, the processing unit 402 is further used for:
acquiring data synchronization information of each of the data sinks, the data synchronization information including at least one of a data addition record, a data deletion record and a data modification record; and monitoring synchronization status of the data sinks according to the data synchronization information of the data sinks.

In a possible embodiment, after the receiving unit 401 receives source data transmitted from the source databases within the current cycle, the processing unit 402 is further used for:
acquiring data transmission status of each source database, wherein the data transmission status is determined according to data transmission time and/or data transmission quantity of each source data; and monitoring the synchronization status of the source databases according to the data transmission status of each source database.

An embodiment of the present disclosure further provides a device which may implement the above described method for synchronizing data. This function may be implemented by hardware that executes corresponding software. In a possible deign, the device includes a memory which is used for storing a computer-executed instruction, a transceiver which is used for implementing communications between the device and other communication entities, and a processor which is connected with the memory by a bus. When the device runs, the processor executes the computer-executed instruction stored in the memory, so that the device executes the above described method for synchronizing data.

An embodiment of the present disclosure further provides a computer storage medium which stores a software program which, when read and executed by one or more processors, implements the method for synchronizing data described in the above described possible implementations.

An embodiment of the present disclosure further provides a computer program product containing an instruction, which, when running in a computer, enables the computer to implement the method for synchronizing data described in the above described possible implementations.

Skilled persons in the art shall appreciate that the embodiment of the present disclosure may be provided as a method, a system or a computer program product. Therefore, the present disclosure may totally include hardware embodiments, or totally include software embodiments, or include both software and hardware embodiments. Besides, the present disclosure may be in the form of a computer program product implemented in one or more computer-executed storage medium(s) (including but not limited to a disk memory, a CD-ROM, an optical memory and so on) that contains computer-executed program codes.

The present disclosure is described with reference to the flowcharts and/or block diagrams according to methods, apparatus (system), and computer program products of the present disclosure. It shall be understood that each flow and/or block of the flowcharts and/or block diagrams or a combination thereof may be implemented by computer program instructions. These computer program instructions may be provided to a processor of a general purpose computer, a special purpose computer, an embedded processor, or any other programmable data processing device to produce a machine that enables, by an instruction executed by a processor of a computer or any other programmable data processing device, generation of a device for implementing a function specified in one or more flows of a flow chart and/or in one or more blocks of a block diagram.

These computer program instructions may otherwise be stored in a computer readable memory that may direct a computer or any other programmable data processing device to operate in a particular manner, so that instructions stored in the computer readable memory produce a product containing an instruction device that implements a function specified in one or more flows of a flow chart and/or in one or more blocks of a block diagram.

These computer program instructions may otherwise be loaded into a computer or any other programmable data processing device, so that a series of operational steps are performed in a computer or any other programmable device to produce computer-implemented processing, thereby instructions executed by a computer or any other programmable device provide steps for implementing the functions specified in one or more flows of a flow chart and/or in one or more blocks of a block diagram.

Although several examples of the present disclosure are described, skilled persons in the art may make additional changes and modifications to these examples once they learn basic creative concepts. Therefore, the appended claims are intended to be interpreted as including a plurality of examples and all changes and modifications falling into the scope of the present disclosure.

It is evident that skilled persons in the art may make different modifications and variations to the present disclosure without departing from the spirit and scope of the present disclosure. Thus, if these modifications and variations of the present disclosure belong to the scope of claims and equivalents of the present disclosure, the present disclosure is also intended to include these modifications and variations.

## Claims

1. A method for synchronizing data, wherein the method is applied to a data synchronization system comprising a management device, a plurality of source databases, and at least one data sink; the method comprising:
receiving, by the management device, each source data transmitted from each source database within a current cycle; each source data being total data of a corresponding source database within the current cycle;
calculating, by the management device, according to correlative relationships among the source databases, and a plurality of data records included in each source data to obtain a target data set; and
transmitting, by the management device, the target data set to each data sink which is used for receiving data.

2. The method according to claim 1, wherein the step that the management device calculating according to the correlative relationships among the source databases and the plurality of data records included in each source data to obtain the target data set, comprises:
determining, by the management device, a first data set within the current cycle according to the correlative relationships among the source databases and the plurality of data records included in each source data;
determining, by the management device, an incremental data set of the first data set compared with a second data set, and the incremental data set being as the target data set, if the management device determines that the second data set corresponding to a previous cycle of the current cycle exists; the second data set being obtained according to each source data transmitted from each of the source databases in the previous cycle.

3. The method according to claim 1, wherein each data record comprises an index value;
the correlative relationships among the source databases are determined by:
determining, by the management device, with respect to a first data record in a first source data, a correlative relationship between the a first data record in a first source data and a second data record according to a position of the first data record in a first data source and a position of the second data record in a second data source, if the management device determines that the second data record having an index value consistent with an index value of the first data record exists in the second source data; the first source data being any source data of the source data, and the first data record being any data record of the plurality of data records included in the first source data;
determining the correlative relationships among the source databases according to correlative relationships among the plurality of data records included in each source data.

4. The method according to claim 2, wherein the source databases are heterogeneous databases, and the heterogeneous databases are databases with varied structures; and
the correlative relationships among the source data are based on a structured query language SQL.

5. The method according to claim 2, wherein the step that the management device transmits the target data set to each data sink, comprises:
determining, by the management device, each target data in the target data set that meets data requirements of each data sink according to data requirements of the data sink;
transmitting, by the management device, each target data to each corresponding data sink.

6. The method according to claim 2, further comprising:
taking the first data set as the target data set, if the management device determines that the second data set does not exist.

7. The method according to any one of claims 1 to 6, after the management device transmits the target data set to each data sink, further comprising:
acquiring, by the management device, data synchronization information of each data sink; the data synchronization information comprising at least one of a data addition record, a data deletion record and a data modification record;
monitoring, by the management device, synchronization status of each data sink according to the data synchronization information of each data sink.

8. The method according to any one of claims 1 to 6, after the management device receives source data transmitted from the source databases within the current cycle, further comprising:
acquiring, by the management device, data transmission status of each source database, wherein the data transmission status is determined according to data transmission time and/or data transmission quantity of each source data;
monitoring, by the management device, synchronization status of the source databases according to the data transmission status of each source database.

9. The method according to any one of claims 1 to 6, after the management device transmits the target data set to each of the data sinks, further comprising:
transmitting, by the management device, an alarm message to an administrator, if the management device determines that the target data set fails to be transmitted and times of failure is greater than a preset threshold, the alarm message being used for notifying the administrator of the failure to transmit the target data set.

10. A device for synchronizing data, wherein the device is applied to a system for synchronizing data comprising a management device, a plurality of source databases, and at least one data sink; the device for synchronizing data is the management device and comprises:
a receiving unit, receiving each source data transmitted from each source database within a current cycle; the source data being total data of a corresponding source database within the current cycle;
a processing unit, calculating according to correlative relationships among the source databases and a plurality of data records included in each source data to obtain a target data set; and
a transmitting unit, transmitting the target data set to each data sink which is used for receiving data.

11. The device according to claim 10, wherein the processing unit is used for:
determining a first data set within the current cycle according to the correlative relationships among the source databases and the plurality of data records included in each source data; and
determining an incremental data set of the first data set compared with a second data set, and the incremental data set being as the target data set, if the management device determines that the second data set corresponding to a previous cycle of the current cycle exists; the second data set being obtained according to each source data transmitted from each of the source databases in the previous cycle.

12. The device according to claim 10, wherein each data record comprises an index value;
and the correlative relationships among the source databases are determined by:
determining, with respect to a first data record in a first source data, a correlative relationship between a first data record in a first source data and a second data record according to a position of the first data record in a first source data and a position of the second data record in a second source data, if the management device determines that the second data record having an index value consistent with an index value of the first data record exists in the second source data; the first source data being any source data of the source data, and the first data record being as any data record of the plurality of data records included in the first source data;
determining the correlative relationships among the source databases according to correlative relationships among the plurality of data records included in each source data.

13. The device according to claim 11, wherein the source databases are heterogeneous databases, and the heterogeneous databases are databases with varied structures; and
the correlative relationships among the source data are based on a structured query language SQL.

14. The device according to claim 11, wherein the transmitting unit is specifically used for:
determining each target data in the target data set that meets data requirements of each of the data sinks according to data requirements of the data sinks; and transmitting each target data to each corresponding data sink.

15. The device according to claim 11, wherein the processing unit is further used for:
taking the first data set as the target data set, if it is determined that the second data set does not exist.

16. The device according to any one of claims 10 to 15, wherein after the transmitting unit transmits the target data set to each data sink, the processing unit is further used for:
acquiring data synchronization information of each data sink; the data synchronization information comprising at least one of a data addition record, a data deletion record and a data modification record; and
monitoring synchronization status of each data sink according to the data synchronization information of the data sink.

17. The device according to any one of claims 10 to 15, wherein after the receiving unit receives source data transmitted from the source databases within the current cycle, the processing unit is further used for:
acquiring data transmission status of each source database, wherein the data transmission status is determined according to data transmission time and/or data transmission quantity of each source data; and
monitoring synchronization status of the source databases according to the data transmission status of each source database.

18. The device according to any one of claims 10 to 15, wherein after the transmitting unit transmits the target data set to each of the data sinks, the processing unit is further used for:
transmitting an alarm message to an administrator, if it is determined that the target data set fails to be transmitted and times of failure is greater than a preset threshold, the alarm message being used for notifying the administrator of the failure to transmit the target data set.

19. A computer readable storage medium, storing an instruction which, when being operated in a computer, enables the computer to implement the method of any one of claims 1 to 9.

20. A computer device, comprising:
a memory, storing a program instruction;
a processor, calling the program instruction stored in the memory to implement the method of any one of claims 1 to 9 according to an acquired program.
